# FASCICULE DE BREVET EUROPEEN

(11) **EP 1 726 230 B1**
(45) Date de publication et mention de la délivrance du brevet: **29.02.2012**
(21) Numéro de dépôt: 06290817.3
(22) Date de dépôt: 19.05.2006
(51) Int. Cl.: A44B 18/00

(54) **Assemblage moule-surmoulé à action anti-remontée**
Schaumformvorrichtung mit einem Einsatz und Befestigungsmittel
Foam mold assembly comprising an insert with fixing means

(30) Priorité: 27.05.2005 FR 0505373
(43) Date de publication de la demande: 29.11.2006
(73) Titulaire: Aplix, 75008 Paris (FR)
(72) Inventeur: Westeel, Stéphane, 59910 Bondues (FR)
(74) Mandataire: Eidelsberg, Olivier Nathan

(56) Documents cités:
- EP-A- 0 439 969
- EP-A- 1 452 106
- US-A1- 2002 023 322
- PATENT ABSTRACTS OF JAPAN vol. 2003, no. 05, 12 mai 2003 (2003-05-12) & JP 2003 019006 A (KURARAY CO LTD), 21 janvier 2003 (2003-01-21)

## Description

La présente invention se rapporte à un assemblage constitué, d'une part, d'un surmoulé, destiné à être fixé à un objet moulé en une mousse, le surmoulé comportant une base ayant une partie centrale, d'une première face de laquelle font saillie des crochets formant parties mâles d'autoagrippant, et deux parties formant lisières de part et d'autre latéralement de la partie centrale et, d'autre part, d'un moule destiné à former par moulage l'objet moulé auquel est destiné à être fixé le surmoulé, le moule comportant, par exemple en son fond, une cavité délimitée par des parois, le surmoulé étant disposé sur la cavité en ayant au moins une partie de ses lisières en contact avec les bords supérieurs des parois de la cavité et les crochets à l'intérieur de la cavité, un matériau pouvant être attiré par un aimant étant fixé au surmoulé, tandis qu'un aimant est disposé au fond de la cavité pour attirer le surmoulé.

Les lisières sont ainsi plaquées contre les bords supérieurs des parois pour ainsi assurer une étanchéité et permettre à de la mousse d'être versée pour former l'objet moulé sans que celle-ci ne s'infiltre dans la cavité et ne vienne en contact avec les crochets pour leur faire perdre leur pouvoir accrochant.

La présente invention se rapporte également à un surmoulé destiné à être utilisé dans un assemblage suivant l'invention, ainsi qu'à un ensemble comportant un objet moulé en mousse auquel est fixé un surmoulé suivant l'invention.

On connaît déjà un assemblage de ce genre, notamment de la demande de brevet français n° 0213217 déposée le 23 octobre 2002 au nom de la demanderesse. Les assemblages de l'art antérieur de ce genre présentent l'inconvénient suivant. Comme les lisières sont posées à plat sur les surfaces supérieures des parois délimitant la cavité de protection des crochets sans s'étendre à l'extérieur de la cavité au-delà de ces parois, la mousse, lorsqu'elle est versée ou coulée, vient en contact avec ces lisières uniquement par la face supérieure (le côté opposé au côté où se trouvent les crochets) et l'objet moulé n'est pas bien fixé au surmoulé car la mousse n'est en contact avec le surmoulé que sur la face supérieure de celui-ci. On aimerait bien pouvoir faire en sorte que la mousse soit en contact avec la lisière sur au moins une partie de la face inférieure également. Cependant, pour ce faire, il serait nécessaire, lorsque l'on pose le surmoulé sur les surfaces supérieures des parois de la cavité de protection des crochets, que l'on fasse dépasser les lisières au-delà des parois du côté extérieur à la cavité. Or, si l'on fait ainsi dépasser les lisières, lorsque l'on coule la mousse, celle-ci vient se placer en premier lieu au fond du moule, en dessous du surmoulé et notamment en dessous des lisières, remonte jusqu'à atteindre le niveau des surfaces supérieures des parois, puis dépasse ce niveau pour remplir tout le moule. Or, la mousse versée au début, qui est dans le bas du moule commence à prendre en masse alors que de la mousse plus liquide est toujours versée dans le moule. Cette mousse du bas devient plus pâteuse et a tendance à remonter. En venant par le dessous du surmoulé, elle pousse celui ci vers le haut par l'intermédiaire de la partie de la lisière qui fait saillie au-delà des parois. Ceci entraîne une détérioration de l'étanchéité au niveau de l'interface entre les lisières et les surfaces supérieures des parois de la cavité de protection des crochets, et la mousse plus liquide qui est en train d'être versée a alors tendance à s'infiltrer plus facilement dans la cavité et à polluer les crochets. Par conséquent, il n'est ainsi pas possible actuellement de faire dépasser les lisières pour mieux ancrer le surmoulé à l'objet moulé.

De JP 2003-019006 on connaît également un assemblage dans lequel les lisières ne reposent pas à plat sur la surface supérieure des parois du moule mais uniquement en étant incliné en contact avec le bord intérieur, l'inclinaison étant favorisé par des rainures de moindre épaisseur formée dans le surmoulé. Des trous sont formés dans les lisières pour permettre un ancrage du surmoulé dans la mousse, après durcissement. Ces trous sont mentionnés dans la description de la demande japonaise comme étant petits.

De US 2002/023322A et de US 4842916 (ce dernier étant considéré comme le document de l'état de la technique le plus pertinent), il est connu un assemblage constitué d'un surmoulé destiné à être fixé à un objet moulé, ayant une partie centrale dont sont issus des crochets et deux parties latérales formant lisières, et d'un moule ayant une cavité délimitée par deux parois verticales, le surmoulé étant disposé sur la cavité avec les crochets à l'intérieur de celle-ci et les lisières reposant sur les bords supérieurs des parois.

Il est prévu en outre des barrières issues du surmoulé pour protéger les crochets de la mousse lorsque celle-ci est versée.

De EP0439969, il est décrit un assemblage constitué d'un surmoulé destiné à être fixé à un objet moulé, ayant une partie centrale dont sont issus des crochets et deux parties latérales formant lisières, et d'un moule ayant une cavité délimitée par deux parois, le surmoulé étant disposé sur la cavité avec les crochets à l'intérieur de celle-ci, un aimant étant disposé au fond du moule. Lorsque la mousse est versée, les lisières ne reposent pas à plat sur les bords supérieurs des parois de la cavité et il est prévu des barrières issues du surmoulé pour protéger les crochets de la mousse.

De WO 2004058496A1, il est connu un surmoulé destiné à être fixé à un objet moulé, ayant une partie centrale dont sont issus des crochets et des lisières. Cependant, lorsque la mousse est versée pour former l'objet moulé, les crochets ne sont pas reçus dans une cavité mais ressortent à l'extérieur du moule.

La présente invention vise à surmonter les inconvénients de l'art antérieur en proposant un assemblage qui va permettre de faire en sorte que, dans le produit final, la mousse soit en contact avec au moins une partie de la face inférieure des lisières du surmoulé et donc d'obtenir un produit dans lequel le surmoulé est mieux fixé à l'objet moulé, et ce, sans que pour autant l'étanchéité au niveau de l'interface lisières - bords supérieurs des parois de la cavité de protection des crochets n'ait été détériorée et, par conséquent, sans que de la mousse ait pu s'infiltrer dans la cavité et polluer les crochets, et les crochets conservant les mêmes qualités d'accrochage à des boucles d'un autoagrippant que dans le cas des surmoulés de l'art antérieur.

Suivant l'invention, l'assemblage est tel que défini à la revendication 1, des perfectionnements étant définis aux sous revendications.

En prévoyant ainsi des lisières à sections d'extrémité ajourées avec de grands trous, on fait en sorte de pouvoir faire dépasser au-delà des parois le surmoulé et lorsque la mousse en remontant atteint le surmoulé à partir du bas du moule, elle passe à travers celui-ci sans le pousser vers le haut. Ainsi, la force de poussée vers le haut du surmoulé par la mousse qui remonte à partir du fond du moule est annihilée par l'existence des trous et le surmoulé est toujours bien maintenu plaqué contre les surfaces supérieures des parois de la cavité de protection des crochets par la force d'attraction de l'aimant sur la matière magnétique du surmoulé, et de la mousse ne peut pas s'infiltrer dans la cavité. Au final, l'objet moulé obtenu est mieux fixé au surmoulé, et notamment est en contact avec le surmoulé par ses deux faces supérieure et inférieure au moins en partie, sans que les crochets aient perdu leur capacité d'accrochage par rapport à des objets moulés de l'art antérieur, c'est à dire sans que de la mousse ne soit venue au contact des crochets. Jusqu'à maintenant dans l'art antérieur il n'était ni prévu de poser les lisières à plat sur les surfaces supérieures des parois verticales du moule, ni de prévoir des « grands » trous.

Suivant un mode de réalisation préféré, la bordure d'extrémité latérale des sections d'extrémité est rectiligne ou à faible courbure.

Ainsi, malgré la présence des trous, le surmoulé repose bien sur les parois, de manière bien compacte, sans subir de déformation en torsion sous l'effet de la mousse.

Suivant un mode de réalisation préféré, toutes les parties vides sont circonscrites par des parties pleines de la section d'extrémité.

Malgré la présence des trous, le surmoulé repose encore mieux sur les parois sans subir de déformation en torsion sous l'effet de la mousse.

La présente invention vise également un objet moulé en mousse auquel est fixé un surmoulé suivant l'invention, caractérisé en ce que la mousse est en contact avec le surmoulé par au moins une partie de sa face inférieure et au moins une partie de sa face supérieure.

Aux figures, données uniquement à titre d'exemple, on décrit un mode de réalisation de l'invention.
La Figure 1 est une vue en coupe transversale d'un assemblage suivant l'invention, un surmoulé suivant l'invention étant posé sur les parois de la cavité de protection des crochets ménagée au fond du moule de l'assemblage,
la Figure 2 est une vue d'ensemble d'un objet moulé obtenu après solidification de la mousse, et
la Figure 3 est une vue de dessus du surmoulé de l'assemblage de la Figure 1.
Les figures ne sont pas à l'échelle, notamment en ce qui concerne les dimensions relatives des différentes sections des lisières et de la partie centrale.

Aux figures, le surmoulé 1 est constitué d'une base 2 sensiblement plane. Des crochets 3 sont issus d'une face 4 inférieure de la base en étant disposés suivant une bande à crochets en définissant ainsi une partie centrale 5 de la base. Deux régions 6 et 7 formant lisières sans crochet s'étendent de part et d'autre de la partie centrale 5. Ces deux lisières 6 et 7 reposent sur les surfaces supérieures 12 et 13 de parois verticales 10 et 11 délimitant une cavité 9 destinée à protéger les crochets lors de la coulée de la mousse dans un moule, dont le fond est représenté par la référence numérique 14. Les surfaces supérieures 12 et 13 sont à distance du fond du moule, et notamment à une plus grande hauteur. Une résine 15 métallique, sous la forme d'une nervure, est fixée, notamment par collage ou simple solidification de la résine, sur la face 8 supérieure opposée à la face 4 inférieure de la base. Les crochets sont disposés suivant des rangées, trois rangées étant représentées au dessin. En général, la base 2 a une longueur (dans le sens perpendiculaire au dessin) bien plus grande que sa largeur. De même, les rangées des crochets sont disposées en une bande qui est plus longue que large.

Les lisières 6 et 7 comportent chacune une section 26, 27 de contact avec les surfaces 12 et 13 respectives, à savoir les deux sections des lisières qui sont destinées à se trouver au-dessus des surfaces 12 et 13, en étant plaquées contre ceux-ci sous l'effet de l'attraction magnétique de la résine métallique par un aimant 30 disposé au fond de la cavité 9. Les lisières 6 et 7 comportent également des sections 36 et 37 d'extrémité qui font saillie au-delà des parois 10 et 11 de la cavité 9, du côté extérieur à la cavité 9. Des trous circulaires (mais qui pourraient avoir également d'autres formes quelconques, par exemple carrées, ovales, rectangulaires, etc.) sont formés dans les sections d'extrémité 36 et 37. Ces trous 40 ont une surface totale qui correspond à plus de la moitié de la surface totale des sections d'extrémité 36, 37 des lisières. L'ensemble de ces trous 40 d'ouverture sont totalement circonscrits par de la matière de la base 2. Les bords 50, 51 d'extrémité latérale des sections d'extrémité 36, 37 des lisières sont des lignes droites ou sensiblement circulaires, sans indentation.

Lorsque l'on coule la mousse dans le moule, celle-ci commence par emplir le fond du moule, puis remonte vers le haut du moule. Lorsqu'elle atteint le niveau où se trouve le surmoulé, elle n'a pas tendance à pousser ce surmoulé vers le haut en poussant contre les faces inférieures des sections d'extrémité des lisières car elle passe au travers des trous 40. Ainsi, le surmoulé n'a pas tendance à se décoller des surfaces supérieures 12, 13 des parois 10 et 11 de la cavité 9 et l'étanchéité de l'interface lisières - surfaces supérieures des parois n'est pas rompu et est bien maintenu et la mousse ne s'infiltre pas dans la cavité et ne vient pas "polluer" les crochets. Une fois le moule entièrement rempli et la mousse solidifiée, on peut retirer l'ensemble formé de la mousse solidifiée et du surmoulé. On obtient alors un objet moulé en mousse comportant un surmoulé dont les crochets ont conservé toute leur capacité d'accrochage à des boucles pour former des parties mâles d'un autoagrippant, par exemple pour y fixer par l'intermédiaire de boucles un tissu, par exemple dans le cas d'un coussin d'automobile. Dans le même temps, le surmoulé est bien fixé à la mousse ou au coussin car la mousse du coussin enrobe au moins en partie les parties de lisières sur leurs deux faces supérieure et inférieure.

De préférence, on utilise pour matériau de la base 2 du polyamide 6, 11 ou 12 (le 12 étant préféré) ou du polyamide 6-6. On peut également utiliser du polyéthylène, du polypropylène ou toute autre matière thermoplastique ou thermodurcissable, notamment du polyester.

La mousse que l'on coule est un matériau compatible avec celui du surmoulé, c'est-à-dire qu'il se fixe bien lorsqu'il se solidifie en contact avec le surmoulé. On peut en particulier choisir une mousse polyuréthane ou polyéther. D'autres matériaux sont bien évidemment possibles. Les deux parois latérales du moule sont à distance l'une de l'autre, la distance pouvant être inférieure à 12 mm, de préférence inférieure à 10 mm, par exemple égale à 6 mm. La largeur totale de la bande de crochets peut être comprise entre 3 et 10 mm, voire plus. La largeur de chaque lisière est comprise entre 2 et 30 mm. En particulier, la largeur de la section d'extrémité de chaque lisière est comprise entre 1 mm et 15mm. Le rapport de l'extension latérale de la section d'extrémité sur l'extension latérale de la section de contact peut être compris entre 0,1 et 15, de préférence entre 2 et 8.

Les crochets ont une forme de sapin qui comprend une tige de section rectangulaire, notamment carrée, et issue de la base et se terminant par une tête formée d'un faîte ayant deux surfaces inclinées se rejoignant à la pointe et dont la base est de plus grande dimension que la section transversale de la tige, de manière à former deux renfoncements de part et d'autre de la tige. Sensiblement à mi-distance en hauteur, deux ailes en forme de crochets recourbés vers le bas sont issues de la tige. Ces crochets sont réalisés par extrusion. D'autres formes de crochets sont également possibles.

La résine métallique peut être constituée de 6 g de poudre métallique, par exemple 8,4 g par mètre linéaire, mélangée à une résine classique d'au moins 4 g par mètre linéaire, pour un poids total de résine métallique d'au moins 10 g par mètre linéaire.

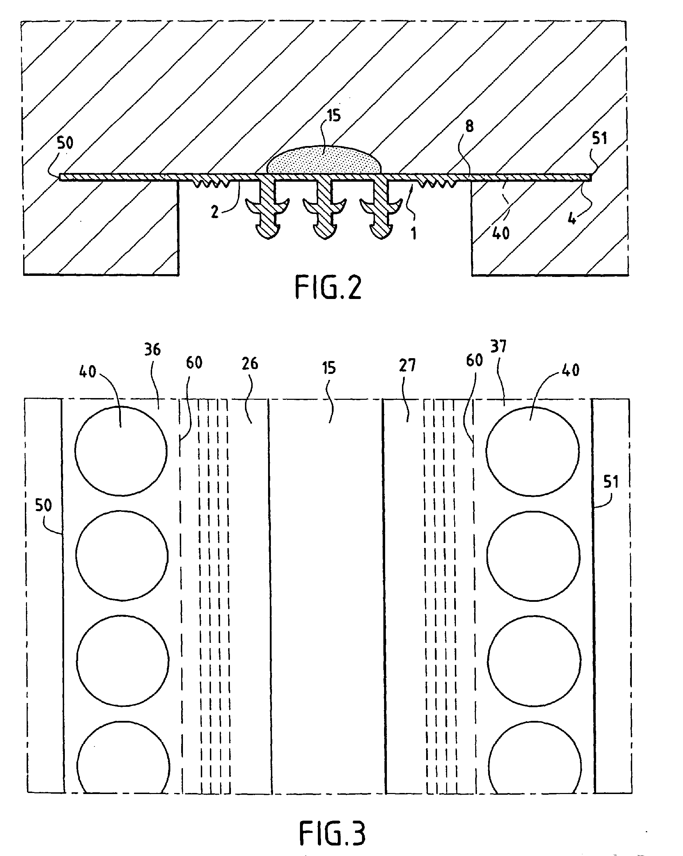

Pour une section d'extrémité, on définit la surface totale comme étant la surface de la lisière à partir de la ligne 60 (en pointillé à la figure 3)ou courbe de délimitation dans le plan de la lisière à partir de laquelle il y a du côté de cette ligne qui est extérieur aux crochets des vides ou trous dans la lisière jusqu'à la ligne ou courbe de délimitation d'extrémité (la bordure latérale 50, 51) de la lisière; tandis que de l'autre côté de la ligne ou courbe de délimitation, la lisière est pleine, et la surface des trous étant la surface des parties vides ou trous à l'intérieur de la surface totale.

Suivant un mode de réalisation préféré, les lisières peuvent comportent chacune au moins deux nervures, de préférence au moins trois ou quatre nervures, qui font saillie des lisières du même côté de la base que les crochets.

Lorsque le surmoulé est posé sur les surfaces supérieures des parois de délimitation d'une cavité de protection des crochets au fond du moule destiné à former l'objet moulé auquel on veut que soit fixé le surmoulé, il est formé avec ces nervures des chambres de décompression délimitées par les lisières, les nervures et les surfaces supérieures des parois de délimitation de la cavité. Ces chambres de décompression permettent d'augmenter l'étanchéité de l'interface lisières-surfaces supérieures, et ce à force d'aimantation égale. En effet, d'une part, par un effet de pointe, la force d'aimantation, au lieu d'être répartie en surface, est maintenant répartie par points ou lignes (le long des sommets des nervures), ces points ou lignes ayant ainsi une plus grande force de placage qu'une pression en surface pour une aimantation égale. D'autre part, lorsque la mousse est coulée, il se forme dans les chambres de décompression des poches d'air à faible pression qui ont une sorte d'effet ventouse qui maintient encore mieux le surmoulé contre les surfaces supérieures des parois. En outre, lorsque l'une des nervures perd le contact sous l'effet de la pression de la mousse et que celle-ci pénètre dans une première chambre, la plus extérieure par rapport aux crochets, il se produit une sorte de décompression ou détente de la mousse, ce qui tend à en stopper la progression vers la chambre suivante.

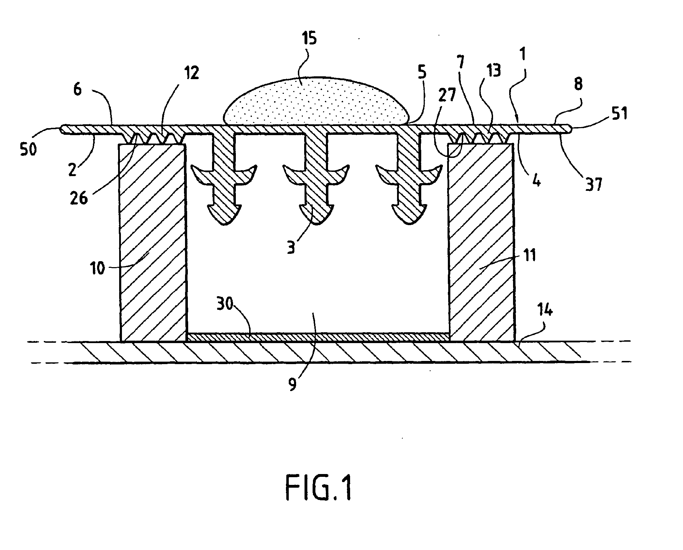

Les nervures 40, 41, 42 longitudinales et parallèles entre elles (c'est-à-dire s'étendant le long de la perpendiculaire à la Figure 1) font saillie respectivement des lisières 6 et 7 du même côté de la base 2 que les crochets. Entre ces trois nervures 40, 41, 42, il est formé deux sillons 50, 51. Les nervures ont une hauteur calculée perpendiculairement aux lisières 6 ou 7 comprises entre 0,2mm et 4 mm. En particulier, ces nervures ont une hauteur inférieure à celle des crochets, notamment inférieure à au moins la moitié de celle des crochets, plus préférablement inférieure à au moins le quart de celle des crochets. Les nervures 40, 41, 42 ont une forme en section transversale triangulaire, la pointe tournée vers le bas. Les lisières s'étendent latéralement du côté des nervures qui est éloigné des crochets sur une distance qui est comprise entre 1 et 15 mm. En particulier, cette distance peut être supérieure à la distance entre les crochets et les nervures. Les nervures sont séparées les unes des autres par une section plane de la lisière, cette section plane s'étendant sur une distance qui peut être comprise entre 0,3 mm et 2 mm, par exemple.

La dimension en largeur de la section d'extrémité ajourée (entre la ligne 60 et la ligne 50 ou 51) est comprise entre 1 et 20 mm, notamment entre 6 et 8 mm.

La dimension en largeur de la section de contact (entre la ligne 60 et le bord de la région centrale à crochets) est comprise entre 1 et 20 mm, notamment entre 2 et 6 mm. En particulier, les surfaces supérieures des parois ont une largeur supérieure à 2mm, préférablement supérieure ou égale à 3 mm, pour avoir une bonne étanchéité. Ainsi, de préférence la section d'extrémité ajourée a une extension en largeur supérieure à celle de la section de contact.

Les lisières 6, 7 comportent chacune au moins deux nervures, de préférence au moins trois ou quatre nervures, qui font saillie des lisières du même côté de la base que les crochets, les lisières étant en contact avec les bords supérieurs des parois par l'intermédiaire de ces nervures.

## Revendications

1. Assemblage constitué, d'une part, d'un surmoulé (1), destiné à être fixé à un objet moulé en une mousse, le surmoulé comportant une base (2) ayant une partie centrale, d'une première face de laquelle font saillie des crochets formant parties mâles d'un auto-agrippant, et deux parties formant lisières (6, 7) de part et d'autre latéralement de la partie centrale et, d'autre part, d'un moule destiné à former par moulage l'objet moulé auquel est destiné à être fixé le surmoulé, le moule comportant en son fond (14) une cavité (9) délimitée par des parois (10, 11), le surmoulé étant disposé sur la cavité en ayant au moins une partie de ses lisières (6, 7) en contact avec les surfaces supérieures des parois de la cavité et les crochets à l'intérieur de la cavité, un matériau (15) pouvant être attiré par un aimant étant fixé au surmoulé, tandis qu'un aimant (30) est disposé au fond de la cavité pour attirer le surmoulé, les lisières (6, 7) comportant chacune une première section (26, 27) de contact, dont au moins une partie est destinée à se trouver sur les surfaces supérieures des parois de la cavité de protection des crochets du moule de l'assemblage, et **caractérisé en ce que** chaque lisière comporte en outre une deuxième section (36, 37) d'extrémité, qui fait saillie au-delà des parois, du côté extérieur latéral de la cavité, et ces sections d'extrémité sont ajourées, notamment dans une mesure telle que le rapport de la surface des parties ajourées (40) sur la surface totale des sections d'extrémité soit supérieure à 33%, de préférence supérieur à 50%, plus préférablement supérieur à 60%.

2. Assemblage suivant la revendication 1, **caractérisé en ce que** les surfaces supérieures des parois ont une dimension en largeur supérieure à 2 mm, de préférence supérieure ou égale à 3 mm.

3. Assemblage suivant la revendication 1 ou 2, **caractérisé en ce que** le rapport de la surface des parties (40) ajourées sur la surface totale des sections d'extrémité est supérieur à 50 %, plus préférablement supérieur à 60%.

4. Assemblage suivant l'une des revendications 1 à 3, **caractérisé en ce que** la bordure (50, 51) d'extrémité latérale des sections d'extrémité est rectiligne ou à faible courbure.

5. Assemblage suivant l'une des revendications 1 à 4, **caractérisé en ce que** toutes les parties (40) ajourées sont circonscrites par des parties pleines de la section d'extrémité.

6. Assemblage suivant l'une des revendications 1 à 5, **caractérisé en ce que** les sections d'extrémité ont une extension latérale supérieure à celle des sections de contact.

## Claims

1. Assembly comprising on the one hand an overmould (1) intended to be fixed to an object moulded in a foam, the overmould comprising a base (2) having a central section, from a first side of which hooks project which form male parts of a self-gripping member, and two sections forming selvages (6, 7) on either side laterally of the central section, and on the other hand a mould destined to form through moulding the moulded object to which the overmould is intended to be fixed, the mould comprising at the bottom (14) thereof a cavity (9) delimited by walls (10, 11), the overmould being arranged on the cavity having at least a section of its selvages (6, 7) in contact with the upper surfaces of the walls of the cavity and the hooks inside the cavity, a material (15) which can be attracted by a magnet being fixed to the overmould, while a magnet (30) is arranged at the bottom of the cavity in order to attract the overmould, the selvages (6, 7) each comprising a first contact section (26, 27), of which at least a part is intended to be located on the upper surfaces of the walls of the hook protection cavity of the mould of the assembly, and **characterized in that** each selvages further comprises a second end section (36, 37) which projects beyond the walls, on the outer lateral side of the cavity, and these end sections are perforated, particularly to the extent that the ratio of the area of the perforated sections (40) and the total area of the end sections is greater than 33%, preferably greater than 50%, more preferably greater than 60%.

2. Assembly according to claim 1, **characterised in that** the upper surfaces of the walls have a width measurement which is greater than 2 mm, preferably greater than or equal to 3 mm.

3. Assembly according to claim 1 or 2, **characterised in that** the ratio of the area of the perforated sections (40) and the total area of the end sections is greater than 50 %, more preferably greater than 60 %.

4. Assembly according to one of claims 1 to 3, **characterised in that** the lateral end border (50, 51) of the end sections is rectilinear or slightly curved.

5. Assembly according to one of claims 1 to 4, **characterised in that** all the perforated sections (40) are surrounded by complete sections of the end section.

6. Assembly according to one of the claims 1 to 5, **characterised in that** the end sections have a lateral extension which is greater than that of the contact sections.

## Patentansprüche

1. System, bestehend aus einerseits einem Einsatzformteil (1), das an einem Formteil aus einem Schaum befestigt werden soll, wobei das Einsatzformteil eine Basis (2) mit einem zentralen Bereich, wobei von einer ersten Seite desselben Haken vorstehen, die die männlichen Teile eines Klettelements bilden, und zwei Bereiche, die Ränder (6, 7) seitlich auf jeder Seite des zentralen Bereichs bilden, aufweist, und andererseits einer Gussform zur Bildung des Formteils, an dem das Einsatzformteil befestigt werden soll, durch Gießen, wobei die Gussform auf deren Grund (14) einen durch Wände (10, 11) begrenzten Hohlraum (9) aufweist, das Einsatzformteil derart auf dem Hohlraum angeordnet ist, dass mindestens ein Bereich von dessen Rändern (6, 7) mit den oberen Oberflächen der Wände des Hohlraums in Kontakt ist und die Haken im Inneren des Hohlraums liegen, ein Material (15), das durch einen Magneten angezogen werden kann, an dem Einsatzformteil befestigt ist, während ein Magnet (30) auf dem Grund des Hohlraums derart angeordnet ist, dass er das Einsatzformteil anzieht, die Ränder (6, 7) jeweils einen ersten Kontaktabschnitt (26, 27) aufweisen, von dem sich mindestens ein Bereich auf den oberen Oberflächen der Wände des Hakenschutzhohlraums der Gussform des Systems befindet, und **dadurch gekennzeichnet, dass** jeder Rand ferner einen zweiten Endabschnitt (36, 37) aufweist, der über die Wände hinaus auf der äußeren seitlichen Seite des Hohlraums vorsteht, und dass diese Endabschnitte durchbrochen sind, insbesondere in einem Maße, dass der Anteil der Oberfläche der durchbrochenen Bereiche (40) an der Gesamtoberfläche der Endabschnitte mehr als 33 %, vorzugsweise mehr als 50 %, noch besser mehr als 60 % beträgt.

2. System nach Anspruch 1, **dadurch gekennzeichnet, dass** die oberen Oberflächen der Wände die Abmessung einer Breite von mehr als 2 mm, vorzugsweise gleich oder mehr als 3 mm aufweisen.

3. System nach Anspruch 1 oder 2, **dadurch gekennzeichnet, dass** der Anteil der Oberfläche der durchbrochenen Bereiche (40) an der Gesamtoberfläche der Endabschnitte mehr als 50 %, vorzugsweise mehr als 60 % beträgt.

4. System nach einem der Ansprüche 1 bis 3, **dadurch gekennzeichnet, dass** der seitliche Endrand (50, 51) der Endabschnitte geradlinig ist oder eine schwache Krümmung aufweist.

5. System nach einem der Ansprüche 1 bis 4, **dadurch gekennzeichnet, dass** alle durchbrochenen Bereiche (40) durch volle Bereiche des Endabschnitts umschrieben bzw. abgegrenzt sind.

6. System nach einem der Ansprüche 1 bis 5, **dadurch gekennzeichnet, dass** die Endabschnitte eine größere seitliche Ausdehnung als die Kontaktbereiche aufweisen.
